# EUROPÄISCHE PATENTSCHRIFT

(11) **EP 1 571 305 B1**
(45) Veröffentlichungstag und Bekanntmachung des Hinweises auf die Patenterteilung: **12.07.2006**
(21) Anmeldenummer: 04029281.5
(22) Anmeldetag: 10.12.2004
(51) Int. Cl.: F01N 7/18, F01N 7/10

(54) **Anordnung zur Fixierung eines Abgaskrümmers auf dem Zylinderkopf einer Brennkraftmaschine**
Device for fixing an exhaust manifold to a cylinder head on an internal combustion engine
Dispositif de fixation d'un collecteur d'échappement à une culasse d'un moteur à combustion interne

(30) Priorität: 05.03.2004 DE 102004010815
(43) Veröffentlichungstag der Anmeldung: 07.09.2005
(73) Patentinhaber: Benteler Automobiltechnik GmbH, 33104 Paderborn (DE)
(72) Erfinder: Smatloch, Christian, 33100 Paderborn (DE); Rostek, Wilfried, 33100 Paderborn (DE)
(74) Vertreter: Griepenstroh, Jörg

(56) Entgegenhaltungen:
- DE-A1- 4 430 339
- DE-U- 20 319 486
- US-A- 3 941 409
- US-A- 5 918 912
- PATENT ABSTRACTS OF JAPAN Bd. 2000, Nr. 06, 22. September 2000 (2000-09-22) & JP 2000 073757 A (DAIHATSU MOTOR CO LTD), 7. März 2000 (2000-03-07)

## Beschreibung

Die Erfindung betrifft eine Anordnung zur dichtenden Fixierung des Kopfflansches eines mindestens zwei in einer Reihe angeordnete Abgasrohre umfassenden Abgaskrümmers auf dem Zylinderkopf einer Brennkraftmaschine, gemäß den Merkmalen in den Oberbegriffen der Ansprüche 1, 3, 5 und 6.

Eine solche Anordnung zählt durch die DE 44 30 339 A1 zum Stand der Technik. Der vergleichsweise dick ausgebildete Kopfflansch weist mehrere in einer Reihe liegende Aussparungen zur Aufnahme von Abgasrohren auf. Die beiden Längsränder des Kopfflansches sind mit quer gerichteten Zungen versehen. Diese Zungen dienen dem Eingriff in Aussparungen, welche in einer Klemmleiste und in einer Spannleiste vorgesehen sind. Sowohl die Klemmleiste als auch die Spannleiste werden durch mehrere Befestigungsschrauben auf der Oberseite des Zylinderkopfs befestigt. Nach der Befestigung der beiden Leisten kann der Kopfflansch durch Neigung um seine vertikale Mittellängsebene zunächst mit der Klemmleiste und danach so durch Herabschwenken mit der Spannleiste formschlüssig gefügt werden, dass der Kopfflansch unter Eingliederung einer Dichtung auf der Oberseite des Zylinderkopfs zu liegen kommt.

In der Spannleiste sind mehrere Klemmschrauben drehbar gelagert. Die Längsachsen der Klemmschrauben erstrecken sich im Winkel zu der Oberseite des Zylinderkopfs. Die Stirnflächen der Klemmschrauben wirken mit Schrägflächen an den mit der Spannleiste gefügten Zungen des Kopfflansches zusammen. Durch Verdrehen der Klemmschrauben kann mithin der Kopfflansch lagefixiert werden, wobei einzelne Vorsprünge an der Klemmleiste

Randbereiche des Kopfflansches übergreifen.

Die spezielle Gestaltung des Kopfflansches, der Klemmleiste und der Spannleiste erfordern einen erheblichen Fertigungsaufwand. Darüber hinaus ist anzumerken, dass die Schrägflächen an den Zungen des Kopfflansches bei einer Verspannung durch die Klemmschrauben den Aufbau hoher Verspannkräfte bewirken. Aufgrund der hohen Betriebstemperaturen, welchen diese Teile des Abgasbereichs ausgesetzt sind, werden die Verspannkräfte aber sehr schnell durch Kriechvorgänge abgebaut. Aufgrund dessen kommt es nach relativ kurzer Zeit zu Undichtigkeiten. Dieser Sachverhalt wird außerdem durch den punktuellen Angriff der Klemmschrauben unterstützt.

Die US-A-5 918 912 offenbart eine Einrichtung zum Anschluss eines Rohrkrümmers an einen nach außen hin offenen Gaskanal eines Zylinderkopfs einer Brennkraftmaschine mit einer im Bereich des Gaskanals am Zylinderkopf angeordneten Aufnahmetasche, in die ein Teil eines dem Gaskanal zugeordneten Flansches des Rohrkrümmers einschiebbar und über diese am Zylinderkopf abstützbar ist, wobei der Aufnahmetasche dem Flansch zugeordnete Spannmittel angeordnet sind und wobei der Flansch mit dem Zylinderkopf über eine Dichtung abdichtend verbunden ist. Es wird vorgeschlagen, dass das Spannmittel eine am Zylinderkopf lösbar befestigbare Führungsleiste umfasst, über die der mindestens eine Flansch an den Zylinderkopf anpressbar ist, wobei zwischen Flansch und Zylinderkopf eine Feder angeordnet ist, über die der Anpressdruck des Flansches definiert einstellbar ist. Die Feder ist in bevorzugter Ausführungsform eine ein- oder mehrlagige Blechdichtung, die mehrere im Wesentlichen elastisch verformbare Sicken aufweist, wobei über die Zahl und/oder Abmessung der Sicken der Anpressdruck der Blechdichtung einstellbar ist. Nachteilig bei dieser Anordnung ist, dass eine solche Dichtung relativ aufwändig in der Herstellung ist und kostengünstige Flachdichtungen nicht zum Einsatz kommen können.

Die US-A-3 941 409 betrifft eine Befestigungsvorrichtung für Auspuffsammelrohre am Zylinderkopf eines Verbrennungsmotors, wobei die Zylinderkopfdichtung gegen ihre Auflagefläche mittels elastischer Elemente gedrückt wird, die zwischen schräg stehenden Stützflächen des Sammelrohres und des Zylinderkopfes angeordnet sind. Dadurch sollen unterschiedliche Wärmeausdehnungen des Kopfflansches des Auspuffsammelrohrs und des Zylinderkopfes ausgeglichen werden, ohne dass dabei eine Verschlechterung der Abdichtung eintritt. Die Ausbildung der schräg stehenden Stützflächen setzt aber eine hinreichende Bauhöhe der Befestigungsanordnung voraus sowie entsprechend massive Flansche, um die Kraft der Federelemente auf die Dichtung zu übertragen.

Der Erfindung liegt - ausgehend vom Stand der Technik - die Aufgabe zugrunde, den Kopfflansch eines mindestens zwei in einer Reihe angeordnete Abgasrohre umfassenden Abgaskrümmers so auf einem Zylinderkopf fixieren zu können, dass dies mit einem geringen Fertigungsaufwand unter Einsatz weniger, dazu einfacher Bauteile unter Sicherstellung der Abgasdichtheit möglich ist.

Diese Aufgabe wird mit den in den Patentansprüchen 1, 3, 5 und 6 angegebenen Merkmalen gelöst.

Ein wesentlicher Gesichtspunkt der Erfindung besteht darin, dass nunmehr ein erster Längsrand des Kopfflansches lediglich mit einer vorab auf der Oberseite des Zylinderkopfs befestigten Anschlagleiste zusammengesteckt werden kann. Hierbei ist diese Steckverbindung so ausgebildet, dass bei zur Oberseite des Zylinderkopfs geneigtem Kopfflansch das Zusammenstecken ohne wesentlichen Kraftaufwand durchgeführt werden kann. Allerdings ist entweder der Flansch oder der Anschlagschenkel der Anschlagleiste durch Biegen federnd elastisch ausgebildet. Aufgrund dessen kann nach dem Zusammenstecken der Kopfflansch unter Integration einer Dichtung in Richtung auf die Oberseite des Zylinderkopfs verschwenkt werden. Hierbei erhöht sich die Spannkraft, ohne besondere Schraubmittel einsetzen zu müssen. Dann wird der zweite Längsrand des Kopfflansches durch Befestigungsschrauben unter Verformung der Dichtung auf dem Zylinderkopf lagefixiert.

Ein bedeutender Vorteil der Erfindung besteht darin, dass die Abgasrohre des Abgaskrümmers unter Strömungsgesichtspunkten optimal ausgeführt werden können. Diese gasdynamischen Vorteile führen zu einem erheblich geringeren Abgasgegendruck und somit zu einer Reduzierung des Kraftstoffverbrauchs. Strömungsoptimierte Oberflächen sind im allgemeinen glatt und ohne scharfe Übergänge ausgeführt. Dieser Umstand bewirkt dann auch eine Erhöhung der Dauerfestigkeit. Da gleichmäßige Wanddicken ohne Eindrückungen gefertigt werden können, ergeben sich auch keine Steifigkeitssprünge und somit keine Spannungsspitzen in den bei Betriebstemperatur sehr heißen Abgasrohren. Weiterhin wird die Dauerhaltbarkeit des Abgaskrümmers dadurch erhöht, dass der Kopfflansch mehr Freiheit hat, sich unter der Anschlagleiste verschieben zu können. Eine solche thermisch bedingte Verschiebung entlastet die Abgasrohre von zu hohen Spannungsspitzen und führt zu einer längeren Lebensdauer der Abgasrohre.

Die Dichtheit des Gesamtsystems - Abgaskrümmer - Dichtung - Zylinderkopf - wird wesentlich verbessert, da die den zweiten Längsrand belastenden Befestigungsschrauben eine quasi linienförmige Beaufschlagung des Kopfflansches bewirken und somit die Spannungsverteilung auf die Dichtung vergleichmäßigen.

Schließlich ergibt sich noch ein Vorteil dadurch, dass der Kopfflansch für mehrere Motortypen geeignet ist, weil er nicht starr auf ein bestimmtes Schraubenbild fixiert werden muss. Sogenannte Schrauberfreigänge für Anschraubwerkzeuge können gänzlich entfallen.

In einer ersten Ausführungsform der Erfindung ist die Anschlagleiste im Querschnitt L-förmig ausgebildet. Mit einem breiten stabilen Befestigungsschenkel ist sie auf der Oberseite des Zylinderkopfs durch Schraubbolzen fixiert. Ein kurzer im wesentlichen parallel zur Oberseite verlaufender Anschlagschenkel übergreift einen im Querschnitt S-förmig konfigurierten ersten Längsrand des Kopfflansches. Dieser ist hierbei aus einer Blechplatine tiefgezogen. Seine Dicke ist deutlich geringer als die Dicke der Anschlagleiste bemessen. Aufgrund der S-förmigen Konfiguration des ersten Längsrands kann dieser bei geneigtem Kopfflansch in den Längsspalt zwischen der Oberseite des Zylinderkopfs und dem Anschlagschenkel der Anschlagleiste geschoben werden. Hierzu ist der Abstand zwischen dem Anschlagschenkel und der Oberseite größer als die Dicke des Kopfflansches bemessen. Liegt die Stirnseite des ersten Längsrands an dem Befestigungsschenkel der Anschlagleiste, so wird der Kopfflansch in Richtung auf die Oberseite des Zylinderkopfs geschwenkt. Hierbei gelangen ein konvexer Bereich des ersten Längsrands mit der Oberseite und ein weiterer konvexer Bereich des ersten Längsrands mit dem Anschlagschenkel in Kontakt. Dieses führt zu einer federnd elastischen Einklemmung des ersten Längsrands zwischen dem Anschlagschenkel der Anschlagleiste und der Oberseite des Zylinderkopfs, wenn der Kopfflansch mit dem Zylinderkopf über den zweiten Längsrand durch die Befestigungsschrauben direkt fest verbunden ist.

Die Verwindungsstabilität des zweiten Längsrands wird dadurch erhöht, dass er gemäß Anspruch 2 eine sich rechtwinklig zur Oberseite des Zylinderkopfs erstreckende Längskante aufweist. Diese ist durch einfaches Umbiegen eines Randbereichs des zweiten Längsrands erstellt worden.

Entsprechend den Merkmalen des Anspruchs 3 können beide Längsränder des aus einer Blechplatine tiefgezogenen Kopfflansches im Querschnitt S-förmig konfiguriert sein. In diesem Fall wird ein erster Längsrand von einem sich im Wesentlichen parallel zur Oberseite des Zylinderkopfs erstreckenden Anschlagschenkel einer L-förmigen Anschlagleiste und ein zweiter Längsrand von einem sich im Wesentlichen parallel zur Oberseite des Zylinderkopfs erstreckenden Fixierschenkel einer L-förmigen Fixierleiste übergriffen.

Bei dieser Ausführungsform wird der zweite Längsrand so schmal wie der erste Längsrand ausgebildet. Er enthält keine Durchgangsbohrungen. Dafür ist der zweite Längsrand federnd elastisch ausgebildet. Hierbei gelangen ein konvexer Bereich des 2. Längsrands mit der Oberseite des Zylinderkopfs bzw. mit der Dichtung und ein weiterer konvexer Bereich des zweiten Längsrands mit dem Fixierschenkel in Kontakt.

Im Hinblick auf den Sachverhalt, dass der Kopfflansch aus einer Blechplatine tiefgezogen ist, werden entsprechend den Merkmalen des Anspruchs 4 zwischen den beiden Längsrändern des Kopfflansches zweckmäßig stutzenartige Ausformungen zur Aufnahme der Abgasrohre vorgesehen. Die Abgasrohre fassen in diese Ausformungen. Kehlnähte zwischen den Stirnseiten der Ausformungen und den äußeren Oberflächen der Abgasrohre fixieren diese sicher in den Ausformungen.

Eine weitere Lösung ist Gegenstand des Anspruchs 5. Hierbei wird ein aus einer Blechplatine gestanzter und sich in einer Ebene erstreckender Kopfflansch verwendet. Dieser ist somit relativ steif. Dementsprechend wird nunmehr die Anschlagleiste im Querschnitt derart S-förmig gekrümmt, dass sie federnd elastisch nachgiebig ist und damit eine schraubenlose Verklemmung des ersten Längsrands des Kopfflansches zwischen der Anschlagleiste und der Oberseite des Zylinderkopfs sicherstellt. Dazu ist der sich weitgehend parallel zur Oberseite des Zylinderkopfs verlaufende Anschlagschenkel der Anschlagleiste in Richtung zur Oberseite leicht konvex gewölbt. Dies erleichtert bei der Montage das Einschieben des ersten Längsrands des geneigt angestellten Kopfflansches in den Spalt zwischen dem Anschlagschenkel und der Oberseite. Liegt die Stirnseite des ersten Längsrands am Steg zwischen dem Anschlagschenkel und dem durch Schraubbolzen auf der Oberseite festgelegten Befestigungsschenkel der Anschlagleiste, wird der Kopfflansch in Richtung auf die Oberseite herab gedrückt und letztlich der zweite Längsrand über die Befestigungsschrauben unter Verpressung der Dichtung direkt auf der Oberseite lagefixiert.

Bei dieser Ausführungsform entspricht die Dicke der Anschlagleiste etwa der halben Dicke des Kopfflansches.

Die Lösung gemäß Anspruch 6 sieht vor, dass ein erster Längsrand des aus einer Blechplatine gestanzten und sich in einer Ebene erstreckenden Kopfflansches von einem im Wesentlichen parallel zur Oberseite des Zylinderkopfs verlaufenden Anschlagschenkel einer im Querschnitt S-förmig ausgebildeten Anschlagleiste übergriffen wird. Der zweite Längsrand wird bei dieser Ausführungsform nicht direkt mit Befestigungsschrauben auf der Oberseite des Zylinderkopfs fixiert, sondern unter Hilfe einer im Querschnitt S-förmigen Fixierleiste, von der ein sich im Wesentlichen parallel zur Oberseite des Zylinderkopfs erstreckender Fixierschenkel den zweiten Längsrand des Kopfflansches übergreift. Der Fixierschenkel der Fixierleiste ist in Richtung zur Oberseite leicht konvex gewölbt. Dies erlaubt wiederum eine federnde Verspannung des zweiten Längsrands des Kopfflansches.

In diesem Zusammenhang ist es nach Anspruch 7 zweckmäßig, zwischen den beiden Längsrändern des Kopfflansches Aussparungen zur Aufnahme der Abgasrohre vorzusehen. Die Abgasrohre fassen in die Aussparungen und werden über ihre Stirnseiten und die inneren Oberflächen der Aussparungen miteinander verschweißt.

Bei der Dichtung zwischen dem Kopfflansch und der Oberseite des Zylinderkopfs kann es sich nach Anspruch 8 um eine Ein- oder Mehrlagendichtung handeln.

Die Erfindung ist nachfolgend anhand von in den Zeichnungen dargestellten Ausführungsbeispielen näher erläutert. Es zeigen:
- Figur 1: im schematischen vertikalen Querschnitt einen Zylinderkopf mit einem Abgaskrümmer während des Zusammenbaus;
- Figur 2: die Anordnung der Figur 1 nach dem Zusammenbau;
- Figur 3: ebenfalls im schematischen vertikalen Querschnitt eine weitere Ausführungsform eines Abgaskrümmers während des Zusammenbaus mit einem Zylinderkopf;
- Figur 4: die Anordnung der Figur 3 nach dem Zusammenbau;
- Figur 5: im schematischen vertikalen Querschnitt eine dritte Ausführungsform eines Abgaskrümmers während des Zusammenbaus mit einem Zylinderkopf;
- Figur 6: die Anordnung der Figur 5 nach dem Zusammenbau;
- Figur 7: im schematischen vertikalen Querschnitt eine vierte Ausführungsform eines Abgaskrümmers während des Zusammenbaus mit einem Zylinderkopf und
- Figur 8: die Anordnung der Figur 7 nach dem Zusammenbau.

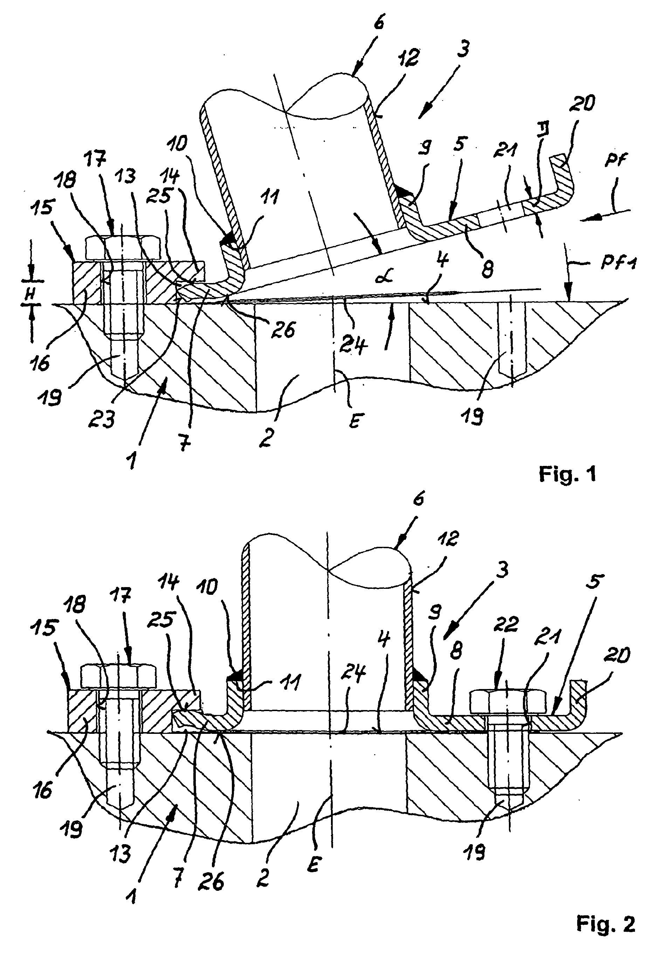

In den Figuren 1 bis 8 ist mit 1 ein Zylinderkopf einer ansonsten nicht näher veranschaulichten Brennkraftmaschine bezeichnet, in welchem mindestens zwei in Reihe liegende Zylinder vorgesehen sind. Die gemeinsame Längsebene der Auslasskanäle 2 dieser Zylinder ist mit E bezeichnet.

Bei der Ausführungsform der Figuren 1 und 2 wird ein Abgaskrümmer 3 auf der Oberseite 4 des Zylinderkopfs 1 festgelegt, der aus einem aus einer Blechplatine tiefgezogenen Kopfflansch 5 und Abgasrohren 6 besteht, deren Anzahl der Anzahl der Zylinder 2 im Zylinderkopf 1 entspricht.

Der Kopfflansch 5 weist zwischen zwei Längsrändern 7, 8 stutzenartige Ausformungen 9 zur Aufnahme der Abgasrohre 6 auf. Die Abgasrohre 6 fassen in die Ausformungen 9. Kehlnähte 10 zwischen den Stirnseiten 11 der Ausformungen 9 und den äußeren Oberflächen 12 der Abgasrohre 6 verbinden die Abgasrohre 6 mit dem Kopfflansch 5.

Ein erster Längsrand 7 des Kopfflansches 5 besitzt aufgrund einer im Querschnitt S-förmigen Konfiguration eine federnd nachgiebige Elastizität. Dabei ist der Querschnitt so gewählt, dass die Dicke D des Kopfflansches 5 und damit auch die Dicke des ersten Längsrands 7 kleiner ist als die Höhe H des Spalts 13 zwischen einem sich im Wesentlichen parallel zur Oberseite 4 des Zylinderkopfs 1 erstreckenden Anschlagschenkel 14 einer L-förmigen stabilen Anschlagleiste 15 und der Oberseite 4. Die Anschlagleiste 15 wird mit ihrem Befestigungsschenkel 16 durch Schraubbolzen 17 vor der Montage des Abgaskrümmers 3 auf der Oberseite 4 festgelegt. Die Schraubbolzen 17 durchsetzen Bohrungen 18 in der Anschlagleiste 15 und werden in Gewindebohrungen 19 im Zylinderkopf 1 eingedreht.

Der andere zweite Längsrand 8 des Kopfflansches 5 ist eben gestaltet. Er besitzt jedoch eine sich rechtwinklig zur Oberseite 4 des Zylinderkopfs 1 erstreckende Längskante 20. In diesem zweiten Längsrand 8 sind Bohrungen 21 zum Durchstecken von Befestigungsschrauben 22 vorgesehen.

Bei der Montage des Abgaskrümmers 3 wird zunächst gemäß Figur 1 der erste Längsrand 7 des vorab mit den Abgasrohren 6 gefügten Kopfflansches 5 unter einem Winkel α gemäß dem Pfeil Pf in den Spalt 13 zwischen dem Anschlagschenkel 14 und der Oberseite 4 des Zylinderkopfs 1 bis zur Anlage der Stirnseite 23 an dem Befestigungsschenkel 16 geschoben. Danach wird eine Dichtung 24 zwischen den Abgaskrümmer 3 und die Oberseite 4 eingelegt. Anschließend wird der Abgaskrümmer 3 entsprechend dem Pfeil Pf1 in Richtung auf die Oberseite 4 verschwenkt. Danach werden Befestigungsschrauben 22 durch die Bohrungen 21 im zweiten Längsrand 8 gesteckt und in entsprechende Gewindebohrungen 19 des Zylinderkopfs 1 eingedreht.

Bei dem Verschwenken des Kopfflansches 5 gemäß dem Pfeil Pf1 gelangt, wie die Figur 2 zu erkennen gibt, ein oberer konvexer Bereich 25 des ersten Längsrands 7 mit dem Anschlagschenkel 14 und ein unterer konvexer Bereich 26 des 1. Längsrands 7 mit der Oberseite 4 bzw. mit der Dichtung 24 in Kontakt. Durch das Herabschwenken des Kopfflansches 5 und durch die Fixierung des Kopfflansches 5 auf der Oberseite 4 unterliegt dann der erste Längsrand 7 einer federnd nachgiebigen Elastizität unter Erhöhung der Klemmspannung, wobei der Abgaskrümmer 3 unter Integration der Dichtung 24 einwandfrei auf der Oberseite 4 des Zylinderkopfs 1 festgelegt wird.

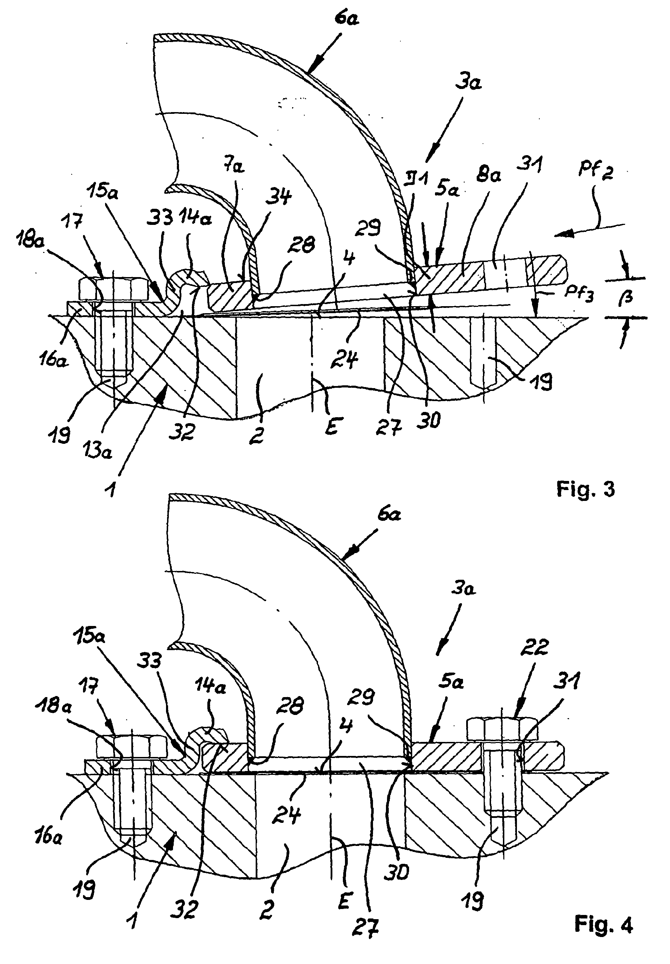

Bei der Ausführungsform der Figuren 3 und 4 ist ein Kopfflansch 5a eines Abgaskrümmers 3a aus einer ebenen Blechplatine gestanzt. Dieser Kopfflansch 5a hat eine vergleichsweise große Dicke D1. Er besitzt mehrere, in einer Reihe liegende Aussparungen 27 zur Aufnahme von Abgasrohren 6a entsprechend der Anzahl der Zylinder 2. Kehlnähte 28 zwischen den Stirnseiten 29 der Abgasrohre 6a und den Innenwänden 30 der Aussparungen 27 dienen der Fixierung der Abgasrohre 6a im Kopfflansch 5a.

Der Kopfflansch 5a besitzt einen ersten Längsrand 7a sowie einen demgegenüber breiteren zweiten Längsrand 8a, in welchem Bohrungen 31 zur Durchführung von Befestigungsschrauben 22 vorgesehen sind.

Vor der Montage des Abgaskrümmers 3a, bestehend aus dem Kopfflansch 5a und den Abgasrohren 6a, wird eine im Querschnitt S-förmige Anschlagleiste 15a mit einem Befestigungsschenkel 16a auf der Oberseite 4 des Zylinderkopfs 1 mittels Schraubbolzen 17 lagefixiert. Die Schraubbolzen 17 durchsetzen Bohrungen 18a in dem Befestigungsschenkel 16a und werden in Gewindebohrungen 19 im Zylinderkopf 1 eingedreht.

Ein sich im Wesentlichen parallel zur Oberseite 4 des Zylinderkopfs 1 erstreckender Anschlagschenkel 14a der Anschlagleiste 15a weist einen nach unten, das heißt in Richtung zur Oberseite 4 hin konvex gewölbten Bereich 32 auf. In Verbindung mit dem Steg 33 zwischen den beiden Schenkeln 16a und 14a der Anschlagleiste 15a wird mithin dem Anschlagschenkel 14a eine gewisse federnde Elastizität quer zur Oberseite 4 verliehen.

Bei der Montage des Abgaskrümmers 3a auf dem Zylinderkopf 1 wird zunächst die Anschlagleiste 15a mit Hilfe der Schraubbolzen 17 auf der Oberseite 4 des Zylinderkopfs 1 fixiert. Danach wird eine Dichtung 24 eingelegt und der Kopfflansch 5a des Abgaskrümmers 3a unter einem Winkel β in Richtung des Pfeils Pf2 in den Spalt 13a zwischen dem Anschlagschenkel 14a und der Oberseite 4 bis zur Anlage an dem Steg 33 der Anschlagleiste 15a geschoben. Hierbei biegt sich der Anschlagschenkel 14a unter Anlage auf der Oberfläche 34 des ersten Längsrands 7a leicht federnd nach oben auf. Danach wird der Kopfflansch 5a gemäß dem Pfeil Pf3 in Richtung auf die Oberseite 4 verschwenkt, so dass nach dem Einsetzen der Befestigungsschrauben 22 und Anziehen derselben der Kopfflansch 5a und damit auch der Abgaskrümmer 3a unter Verpressung der Dichtung 24 sicher am Zylinderkopf 1 festgelegt wird.

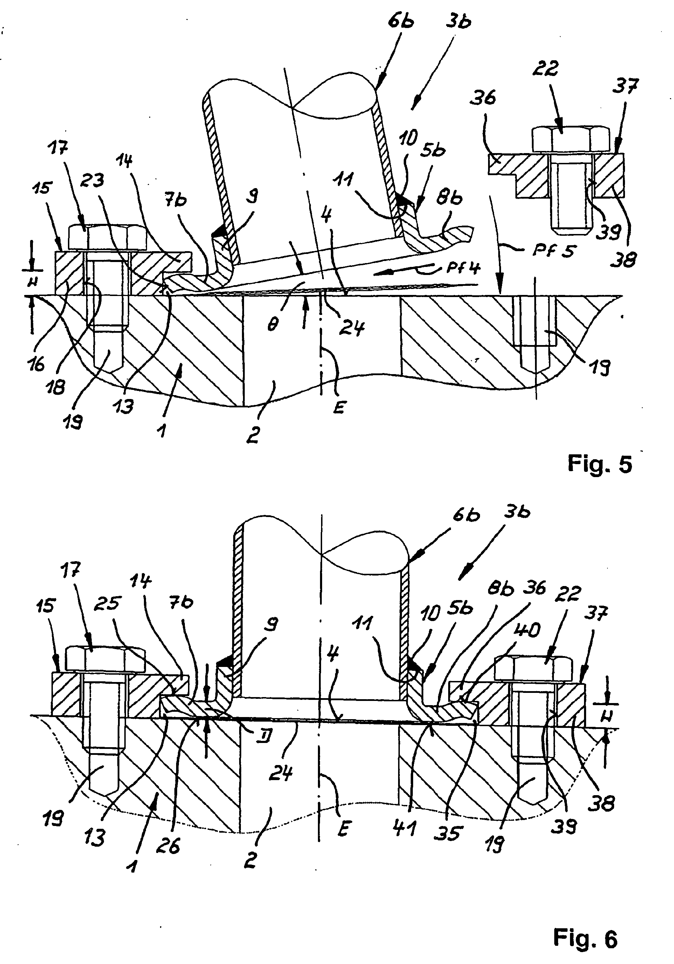

Bei der Ausführungsform der Figuren 5 und 6 wird ein Abgaskrümmer 3b auf der Oberseite 4 des Zylinderkopfs 1 festgelegt, der, wie bei der Ausführungsform der Figuren 1 und 2, aus einem aus einer Blechplatine tiefgezogenen Kopfflansch 5b und Abgasrohren 6b besteht, deren Anzahl der Anzahl der Zylinder 2 im Zylinderkopf 1 entspricht.

Der Kopfflansch 5b weist zwischen zwei Längsrändern 7b, 8b stutzenartige Ausformungen 9 zur Aufnahme der Abgasrohre 6b auf. Die Abgasrohre 6b fassen in die Ausformungen 9. Kehlnähte 10 zwischen den Stirnseiten 11 der Ausformungen 9 und den äußeren Oberflächen 12 der Abgasrohre 6b verbinden die Abgasrohre 6b mit dem Kopfflansch 5b.

Ein erster Längsrand 7b des Kopfflansches 5b besitzt aufgrund einer im Querschnitt S-förmigen Konfiguration eine federnd nachgiebige Elastizität. Dabei ist der Querschnitt so gewählt, dass die Dicke D des Kopfflansches 5b und damit auch die Dicke des ersten Längsrands 7b kleiner ist als die Höhe H des Spalts 13 zwischen einem sich im Wesentlichen parallel zur Oberseite 4 des Zylinderkopfs 1 erstreckenden Anschlagschenkel 14 einer L-förmigen stabilen Anschlagleiste 15 und der Oberseite 4. Die Anschlagleiste 15 wird mit ihrem Befestigungsschenkel 16 durch Schraubbolzen 17 vor der Montage des Abgaskrümmers 3b auf der Oberseite 4 festgelegt. Die Schraubbolzen 17 durchsetzen Bohrungen 18 in der Anschlagleiste 15 und werden in Gewindebohrungen 19 im Zylinderkopf 1 eingedreht.

Auch der zweite Längsrand 8b des Kopfflansches 5b besitzt aufgrund einer im Querschnitt S-förmigen Konfiguration eine federnd nachgiebige Elastizität. Dabei ist der Querschnitt so gewählt, dass die Dicke D des Kopfflansches 5b und damit auch die Dicke des zweiten Längsrands 8b kleiner ist als die Höhe H des Spalts 35 zwischen einem sich im Wesentlichen parallel zur Oberseite 4 des Zylinderkopfs 1 erstreckenden Fixierschenkel 36 einer L-förmigen stabilen Fixierleiste 37 und der Oberseite 4. Die Fixierleiste 37 wird mit ihrem Befestigungsschenkel 38 durch Befestigungsschrauben 22 auf der Oberseite 4 festgelegt. Die Befestigungsschrauben 22 durchsetzen Bohrungen 39 in der Fixierleiste 37 und werden in Gewindebohrungen 19 im Zylinderkopf 1 eingedreht.

Bei der Montage des Abgaskrümmers 3b wird zunächst gemäß Figur 5 der erste Längsrand 7b des vorab mit den Abgasrohren 6b gefügten Kopfflansches 5b unter einem Winkel θ gemäß dem Pfeil Pf4 in den Spalt 13 zwischen dem Anschlagschenkel 14 und der Oberseite 4 des Zylinderkopfs 1 bis zur Anlage der Stirnseite 23 an dem Befestigungsschenkel 16 geschoben. Danach wird eine Dichtung 24 zwischen den Abgaskrümmer 3b und die Oberseite 4 eingelegt. Anschließend wird der Abgaskrümmer 3b entsprechend dem Pfeil Pf5 in Richtung auf die Oberseite 4 verschwenkt. Danach wird die Fixierleiste 37 mit Hilfe der Befestigungsschrauben 22 auf der Oberseite 4 verspannt.

Bei dem Verschwenken des Kopfflansches 5b gemäß dem Pfeil Pf5 gelangt, wie die Figur 6 zu erkennen gibt, ein oberer konvexer Bereich 35 des ersten Längsrands 7b mit dem Anschlagschenkel 14 und ein unterer konvexer Bereich 26 des ersten Längsrands 7b mit der Oberseite 4 bzw. mit der Dichtung 24 in Kontakt. Durch das Herabschwenken des Kopfflansches 5b und durch die Fixierung des Kopfflansches 5b auf der Oberseite 4 unterliegt dann der erste Längsrand 7b einer federnd nachgiebigen Elastizität unter Erhöhung der Klemmspannung.

Derselbe Sachverhalt ergibt sich durch die federnd nachgiebige elastische Verspannung zwischen dem Fixierschenkel 36 der Fixierleiste 37 und dem 2. Längsrand 8b. Hierbei liegt der Fixierschenkel 36 auf einem oberen konvexen Bereich 40 des zweiten Längsrands 8b, während ein unterer konvexer Bereich 41 des 2. Längsrands 8b auf der Oberseite 4 bzw. auf der Dichtung 24 liegt.

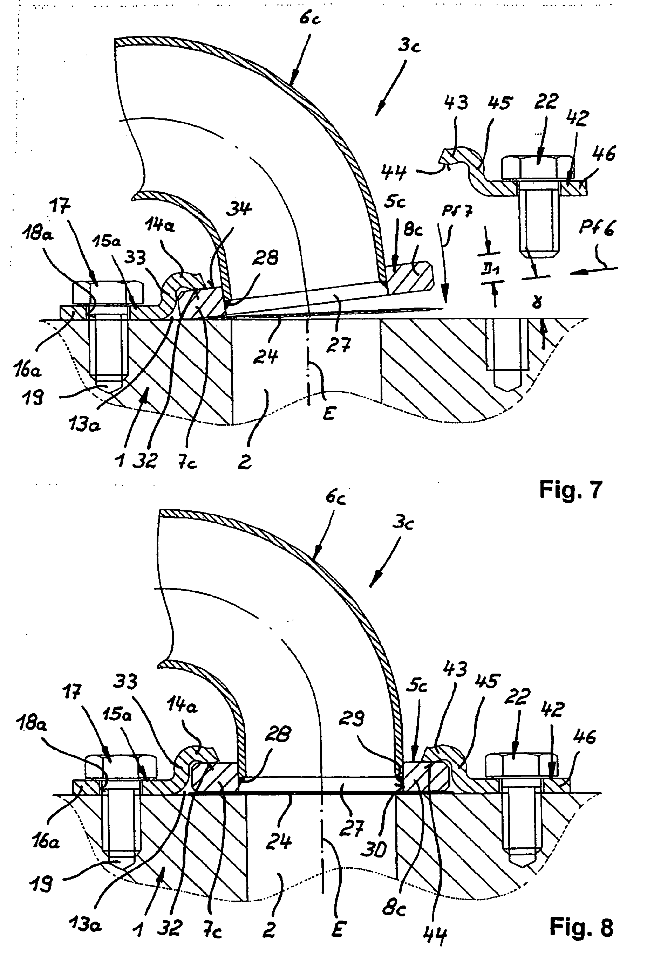

Bei der Ausführungsform der Figuren 7 und 8 ist ein Kopfflansch 5c eines Abgaskrümmers 3c aus einer ebenen Blechplatine gestanzt. Dieser Kopfflansch 5c hat eine vergleichsweise große Dicke D1. Er besitzt mehrere in einer Reihe liegende Aussparungen 27 zur Aufnahme von Abgasrohren 6c entsprechend der Anzahl der Zylinder 2. Kehlnähte 28 zwischen den Stirnseiten 29 der Abgasrohre 6c und den Innenwänden 30 der Aussparungen 27 dienen der Fixierung der Abgasrohre 6c im Kopfflansch 5c.

Der Kopfflansch 5c besitzt zwei gleich breite Längsränder 7c, 8c ohne Bohrungen.

Vor der Montage des Abgaskrümmers 3c, bestehend aus dem Kopfflansch 5c und den Abgasrohren 6c, wird eine im Querschnitt S-förmige Anschlagleiste 15a mit einem Befestigungsschenkel 16a adäquat zur Ausführungsform der Figuren 3 und 4 auf der Oberseite 4 des Zylinderkopfs 1 mittels Schraubbolzen 17 lagefixiert. Die Schraubbolzen 17 durchsetzen Bohrungen 18a in dem Befestigungsschenkel 16a und werden in Gewindebohrungen 19 im Zylinderkopf 1 eingedreht.

Ein sich im Wesentlichen parallel zur Oberseite 4 des Zylinderkopfs 1 erstreckender Anschlagschenkel 14a der Anschlagleiste 15a weist einen nach unten, das heißt in Richtung zur Oberseite 4 hin kovex gewölbten Bereich 32 auf. In Verbindung mit dem Steg 33 zwischen den beiden Schenkeln 14a, 16a der Anschlagleiste 15a wird mithin dem Anschlagschenkel 14a eine bestimmte federnde Elastizität verliehen.

Bei der Montage des Abgaskrümmers 3c auf dem Zylinderkopf 1 wird zunächst die Anschlagleiste 15a mit Hilfe der Schraubbolzen 17 auf der Oberseite 4 des Zylinderkopfs 1 fixiert. Danach wird eine Dichtung 24 eingelegt und der Kopfflansch 5c des Abgaskrümmers 3c unter einem Winkel γ in Richtung des

Pfeils in Pf6 den Spalt 13a zwischen dem Anschlagschenkel 14a und der Oberseite 4 bis zur Anlage an dem Steg 33 der Anschlagleiste 15a geschoben (Figur 7). Hierbei biegt sich der Anschlagschenkel 14a unter Anlage auf der Oberfläche 34 des ersten Längsrands 7c leicht federnd nach oben auf. Danach wird der Kopfflansch 5c gemäß dem Pfeil Pf7 in Richtung auf die Oberseite 4 verschwenkt.

Anschließend wird eine im Querschnitt S-förmige Fixierleiste 42 mit Hilfe von Befestigungsschrauben 22 so auf der Oberseite 4 des Zylinderkopfs 1 befestigt, dass ein sich im wesentlichen parallel zur Oberseite 4 erstreckender Fixierschenkel 43 den zweiten Längsrand 8c des Kopfflanschs 5c federnd elastisch übergreift. Hierbei liegt ein nach unten konvex gewölbter Bereich 44 auf dem 2. Längsrand 8c auf. In Verbindung mit dem Steg 45 zwischen dem Fixierschenkel 43 und dem Befestigungsschenkel 46 der Fixierleiste 42 wird mithin dem Fixierschenkel 43 eine bestimmte federnde Elastizität verliehen.

Nach dem Anziehen der Befestigungsschrauben 22 ist der Abgaskrümmer 3c unter Verpressung der Dichtung 24 sicher am Zylinderkopf 1 festgelegt.

### Bezugszeichenaufstellung

- 1 -: Zylinderkopf
- 2 -: Auslasskanäle der Zylinder
- 3 -: Abgaskrümmer
- 3a -: Abgaskrümmer
- 3b -: Abgaskrümmer
- 3c -: Abgaskrümmer
- 4 -: Oberseite v. 1
- 5 -: Kopfflansch v. 3
- 5a -: Kopfflansch
- 5b -: Kopfflansch
- 5c -: Kopfflansch
- 6 -: Abgasrohre v. 3
- 6a -: Abgasrohre
- 6b -: Abgasrohre
- 6c -: Abgasrohre
- 7 -: erster Längsrand v. 5
- 7a -: erster Längsrand v. 5a
- 7b -: erster Längsrand v. 5b
- 7c -: erster Längsrand v. 5c
- 8 -: zweiter Längsrand v. 5
- 8a -: zweiter Längsrand v. 5a
- 8b -: zweiter Längsrand v. 5b
- 8c -: zweiter Längsrand v. 5c
- 9 -: Ausformungen v. 5, 5b
- 10-: Kehlnähte zw. 11 u. 12
- 11 -: Stirnseiten v. 9
- 12 -: Oberflächen v. 6, 6b
- 13 -: Spalt zw. 4u. 14
- 13a -: Spalt zw. 14a u. 4
- 14 -: Anschlagschenkel v. 15
- 14a -: Anschlagschenkel v. 15a
- 15 -: Anschlagleiste
- 15a -: Anschlagleiste
- 16 -: Befestigungsschenkel v. 15
- 16a -: Befestigungsschenkel v. 15a
- 17 -: Schraubbolzen
- 18 -: Bohrungen in 15
- 18a -: Bohrungen in 16a
- 19 -: Gewindebohrung in 1
- 20 -: Längskante an 8
- 21 -: Bohrungen in 8
- 22 -: Befestigungsschrauben
- 23 -: Stirnseite v. 7, 7b
- 24 -: Dichtung
- 25 -: konvexer Bereich v. 7, 7b
- 26 -: konvexer Bereich v. 7, 7b
- 27 -: Aussparungen in 5a, 5c
- 28 -: Kehlnähte zw. 29 u. 30
- 29 -: Stirnseiten v. 6a, 6c
- 30 -: Innenwände v. 27
- 31 -: Bohrungen in 8a
- 32 -: gewölbter Bereich v. 15a
- 33 -: Steg zw. 14a u. 16a
- 34 -: Oberfläche v. 7a
- 35 -: Spalt zw. 36 u. 4
- 36 -: Fixierschenkel v. 37
- 37 -: Fixierleiste
- 38 -: Befestigungsschenkel v. 37
- 39 -: Bohrungen in 37
- 40 -: konvexer Bereich v. 8b
- 41 -: konvexer Bereich v. 8b
- 42 -: Fixierleiste
- 43 -: Fixierschenkel v. 42
- 44 -: konvexer Bereich v. 43
- 45 -: Steg zw. 43 u. 46
- 46 -: Befestigungsschenkel v. 42

- D -: Dicke v. 5, 5b
- D1 -: Dicke v. 5a, 5c
- E -: Längsebene v. 2
- H -: Höhe v. 13, 35
- Pf -: Pfeil
- Pf1 -: Pfeil
- Pf2 -: Pfeil
- Pf3 -: Pfeil
- Pf4 -: Winkel
- Pf5 -: Winkel
- Pf6 -: Winkel
- Pf7 -: Winkel
- α -: Winkel
- β -: Winkel
- θ-: Winkel
- γ -: Winkel

## Patentansprüche

1. Anordnung zur dichtenden Fixierung des Kopfflansches (5, 5b) eines mindestens zwei in einer Reihe angeordnete Abgasrohre (6, 6a-c) umfassenden Abgaskrümmers (3, 3a-c) auf dem Zylinderkopf (1) einer Brennkraftmaschine, welche eine mit dem Zylinderkopf (1) verschraubte, einen ersten Längsrand (7, 7a-c) des Kopfflansches (5, 5a-c) übergreifende Anschlagleiste (15, 15a), auf den anderen zweiten Längsrand (8, 8a-c) des Kopfflansches (5, 5b) einwirkende Spannmittel (22) und eine Dichtung (24) zwischen dem Kopfflansch (5, 5a-c) und dem Zylinderkopf (1) aufweist, **dadurch gekennzeichnet, dass** die Anschlagleiste (15) im Querschnitt L-förmig ausgebildet ist und mit einem im Wesentlichen parallel zur Oberseite (4) des Zylinderkopfs (1) verlaufenden Anschlagschenkel (14) den im Querschnitt S-förmig und federnd elastisch konfigurierten ersten Längsrand (7) des aus einer Blechplatine tiefgezogenen Kopfflansches (5) übergreift, während der flächig ausgebildete und mit Bohrungen (21) versehene zweite Längsrand (8) des Kopfflansches (5) durch Befestigungsschrauben (22) direkt mit dem Zylinderkopf (1) verspannt ist.

2. Anordnung nach Anspruch 1, **dadurch gekennzeichnet, dass** der zweite Längsrand (8) eine sich rechtwinklig zur Oberseite (4) des Zylinderkopfs (1) erstreckende Längskante (20) aufweist.

3. Anordnung nach Anspruch 1, **dadurch gekennzeichnet, dass** der zweite Längsrand (8b) des Kopfflansches (5b) durch Spannmittel in Form von Befestigungsschrauben (22) wenigstens indirekt mit dem Zylinderkopf (1) verspannt ist, wobei beide Längsränder (7b, 8b) des aus einer Blechplatine tiefgezogenen Kopfflansches (5b) im Querschnitt S-förmig und federnd elastisch konfiguriert sind, von denen ein erster Längsrand (7b) von einem sich im Wesentlichen parallel zur Oberseite (4) des Zylinderkopfes (1) erstreckenden Anschlagschenkel (14) einer L-förmigen Anschlagleiste (15) und ein zweiter Längsrand (8b) von einem sich im Wesentlichen parallel zur Oberseite (4) des Zylinderkopfs (1) erstreckenden Fixierschenkel (36) einer L-förmigen Fixierleiste (37) übergriffen sind.

4. Anordnung nach einem der Ansprüche 1 bis 3, **dadurch gekennzeichnet, dass** zwischen den beiden Längsrändern (7, 8; 7b, 8b) des Kopfflansches (5, 5b) stutzenartige Ausformungen (9) zur Aufnahme der Abgasrohre (6, 6b) vorgesehen sind.

5. Anordnung zur dichtenden Fixierung des Kopfflansches (5, 5c) eines mindestens zwei in einer Reihe angeordnete Abgasrohre (6, 6a-c) umfassenden Abgaskrümmers (3, 3a-c) auf dem Zylinderkopf (1) einer Brennkraftmaschine, welche eine mit dem Zylinderkopf (1) verschraubte, einen ersten Längsrand (7, 7a-c) des Kopfflansches (5, 5a-c) übergreifende Anschlagleiste (15,15a), auf den anderen zweiten Längsrand (8, 8a-c) des Kopfflansches (5, 5a-c) einwirkende Spannmittel (22) und eine Dichtung (24) zwischen dem Kopfflansch (5, 5c) und dem Zylinderkopf (1) aufweist, **dadurch gekennzeichnet, dass** die Anschlagleiste (15a) im Querschnitt S-förmig und federnd elastisch ausgebildet ist und mit einem im Wesentlichen parallel zur Oberseite (4) des Zylinderkopfs (1) verlaufenden Anschlagschenkel (14a) den ersten Längsrand (7a) des aus einer Blechplatine gestanzten und sich in einer Ebene erstreckenden Kopfflansches (5a) übergreift, wohingegen der mit Bohrungen (31) versehene zweite Längsrand (8a) des Kopfflansches (5a) durch Befestigungsschrauben (22) direkt mit dem Zylinderkopf (1) verspannt ist.

6. Anordnung zur dichtenden Fixierung des Kopfflansches (5, 5c) eines mindestens zwei in einer Reihe angeordnete Abgasrohre (6, 6a-c) umfassenden Abgaskrümmers (3, 3a-c) auf dem Zylinderkopf (1) einer Brennkraftmaschine, welche eine mit dem Zylinderkopf (1) verschraubte, einen ersten Längsrand (7, 7a-c) des Kopfflansches (5, 5a-c) übergreifende Anschlagleiste (15,15a), auf den anderen zweiten Längsrand (8, 8a-c) des Kopfflansches (5, 5a-c) einwirkende Spannmittel (22) und eine Dichtung (24) zwischen dem Kopfflansch (5, 5c) und dem Zylinderkopf (1) aufweist, **dadurch gekennzeichnet, dass** der zweite Längsrand (8, 8a-c) des Kopfflansches (5, 5c) durch Spannmittel in Form von Befestigungsschrauben (22) wenigstens indirekt mit dem Zylinderkopf (1) verspannt ist, wobei ein erster Längsrand (7c) des aus einer Blechplatine gestanzten und sich in einer Ebene erstreckenden Kopfflansches (5c) von einem im Wesentlichen parallel zur Oberseite (4) des Zylinderkopfs (1) verlaufenden Anschlagschenkel (14a) einer im Querschnitt S-förmig und federnd elastisch ausgebildeten Anschlagleiste (15a) und ein zweiter Längsrand (8c) des Kopfflansches (5c) von einem sich im Wesentlichen parallel zur Oberseite (4) des Zylinderkopfs (1) erstreckenden Fixierschenkel (43) einer im Querschnitt S-förmigen Fixierleiste (42) übergriffen sind.

7. Anordnung nach Anspruch 5 oder 6, **dadurch gekennzeichnet, dass** zwischen den beiden Längsrändern (7a, 8a; 7c, 8c) des Kopfflansches (5a, 5c) Aussparungen (27) zur Aufnahme der Abgasrohre (6a, 6c) vorgesehen sind.

8. Anordnung nach einem der Ansprüche 1 bis 7, **dadurch gekennzeichnet, dass** die Dichtung (24) als Ein- oder Mehrlagendichtung ausgebildet ist.

## Claims

1. Arrangement for sealingly fixing the head flange (5, 5b) of an exhaust manifold (3, 3a-c), which comprises at least two exhaust pipes (6, 6a-c) arranged in a row, on the cylinder head (1) of an internal combustion engine, which arrangement has a stop strip (15, 15a), which is screwed to the cylinder head (1) and engages over a first longitudinal border (7, 7a-c) of the head flange (5, 5a-c), clamping means (22) acting on the other, second longitudinal border (8, 8a-c) of the head flange (5, 5b), and a seal (24) between the head flange (5, 5a-c) and the cylinder head (1), **characterized in that** the stop strip (15) is of L-shaped design in cross section and engages, by means of a stop leg (14) running essentially parallel to the upper side (4) of the cylinder head (1), over the first longitudinal border (7), which is configured in an S-shaped manner in cross section and resiliently elastically, of the head flange (5), which is deep-drawn from a sheet-metal blank, while the second longitudinal border (8) of the head flange (5), which longitudinal border is of planar design and is provided with holes (21), is clamped directly to the cylinder head (1) by fastening screws (22).

2. Arrangement according to Claim 1, **characterized in that** the second longitudinal border (8) has a longitudinal edge (20) extending at right angles to the upper side (4) of the cylinder head (1).

3. Arrangement according to Claim 1, **characterized in that** the second longitudinal border (8b) of the head flange (5b) is clamped at least indirectly to the cylinder head (1) by clamping means in the form of fastening screws (22), the two longitudinal borders (7b, 8b) of the head flange (5b), which is deep-drawn from a sheet-metal blank, being configured in an S-shaped manner in cross section and resiliently elastically and of which a first longitudinal border (7b) is engaged over by a stop limb (14) of an L-shaped stop strip (15), which stop limb extends essentially parallel to the upper side (4) of the cylinder head (1), and a second longitudinal border (8b) is engaged over by a fixing limb (36) of an L-shaped fixing strip (37), which fixing limb extends essentially parallel to the upper side (4) of the cylinder head (1).

4. Arrangement according to one of Claims 1 to 3, **characterized in that** support-like formations (9) for receiving the exhaust pipes (6, 6b) are provided between the two longitudinal edges (7, 8b; 7b, 8b) of the head flange (5, 5b).

5. Arrangement for sealingly fixing the head flange (5, 5c) of an exhaust manifold (3, 3a-c), which comprises at least two exhaust pipes (6a, 6a-c) arranged in a row, on the cylinder head (1) of an internal combustion engine, which arrangement has a stop strip (15, 15a), which is screwed to the cylinder head (1) and engages over a first longitudinal border (7a, 7a-c) of the head flange (5a, 5a-c), clamping means (22) acting on the other, second longitudinal border (8, 8a-c) of the head flange (5a, 5a-c), and a seal (24) between the head flange (5, 5c) and the cylinder head (1), **characterized in that** the stop strip (15a) is of S-shaped design in cross section and is of resiliently elastic design and engages, by mean of a stop limb (14a), which runs essentially parallel to the upper side (4) of the cylinder head (1), over the first longitudinal border (7a) of the head flange (5a), which is punched from a sheet-metal blank and extends in a plane, whereas the second longitudinal border (8a) of the head flange (5a), which longitudinal border is provided with holes (31), is clamped directly to the cylinder head (1) by fastening screws (22).

6. Arrangement for sealingly fixing the head flange (5, 5c) of an exhaust manifold (3, 3a-c), which comprises at least two exhaust pipes (6, 6a-c) arranged in a row, on the cylinder head (1) of an internal combustion engine, which arrangement has a stop strip (15, 15a), which is screwed to the cylinder head (1) and engages over a first longitudinal border (7, 7a-c) of the head flange (5a, 5a-c), clamping means (22) acting on the other, second longitudinal border (8, 8a-c) of the head flange (5, 5a-c), and a seal (24) between the head flange (5, 5c) and the cylinder head (1), **characterized in that** the second longitudinal border (8, 8a-c) of the head flange (5, 5c) is clamped at least indirectly to the cylinder head (1) by clamping means in the form of fastening screws (22), a first longitudinal border (7c) of the head flange (5c), which is punched from a sheet-metal blank and extends in a plane, being engaged over by a stop limb (14a), which runs essentially parallel to the upper side (4) of the cylinder head (1), of a stop strip (15a), which is of S-shaped design in cross section and is of resiliently elastic design, and a second longitudinal border (8c) of the head flange (5c) is engaged over by a fixing limb (43), which extends essentially parallel to the upper side (4) of the cylinder head (1), of a fixing strip (42) which is S-shaped in cross section.

7. Arrangement according to Claim 5 or 6, **characterized in that** cutouts (27) for receiving the exhaust pipes (6a, 6c) are provided between the two longitudinal borders (7a, 8a; 7c, 8c) of the head flange (5a, 5c).

8. Arrangement according to one of Claims 1 to 7, **characterized in that** the seal (24) is designed as a single- or multi-layer seal.

## Revendications

1. Dispositif de fixation étanche de la bride de tête (5, 5b) d'un collecteur d'échappement (3, 3 a-c), comprenant au moins deux tuyaux d'échappement (6, 6a-c) disposés en rang, sur la culasse (1) d'un moteur à combustion interne, lequel présente une baguette de butée (15, 15a) vissée sur la culasse (1) venant en engagement avec un premier bord longitudinal (7, 7a-c) de la bride de tête (5, 5a-c), des moyens de contrainte (22) agissant sur l'autre bord longitudinal (8, 8a-c) de la bride de tête (5, 5b), et un joint (24) entre la bride de tête (5, 5a-c) et la culasse (1), **caractérisé en ce que** la baguette de butée (15) est formée en L dans sa section transversale et vient en engagement par une branche de butée (14) s'étendant de manière essentiellement parallèle au côté supérieur (4) de la culasse (1) avec le premier bord longitudinal (7) de la tête de bride (5) emboutie dans une platine en tôle, formé en S dans sa section transversale et de manière élastique en faisant ressort, alors que le deuxième bord longitudinal (8) de la tête de bride (5) formé en plan et muni de perçages (21) est contraint directement contre la culasse (1) par des vis de fixation (22).

2. Dispositif selon la revendication 1, **caractérisé en ce que** le deuxième bord longitudinal (8) présente une arête longitudinale (20) s'étendant de manière orthogonale par rapport au côté supérieur (4) de la culasse (1).

3. Dispositif selon la revendication 1, **caractérisé en ce que** le deuxième bord longitudinal (8b) de la culasse (5b) est contraint au moins indirectement contre la culasse (1) par des moyens de contrainte sous forme de vis de fixation (22), moyennant quoi les deux bords longitudinaux (7b, 8b) de la tête de bride (5b) emboutie dans une platine en tôle sont formés en S dans leur section transversale et de manière élastique en faisant ressort, parmi lesquels un premier bord longitudinal (7b) vient en engagement avec une branche de butée (14) d'une baguette de butée (15) en forme de L, s'étendant de manière essentiellement parallèle au côté supérieur (4) de la culasse (1) et un deuxième bord longitudinal (8b) vient en engagement avec une branche de fixation (36) d'une baguette de fixation (37) en forme de L, s'étendant de manière essentiellement parallèle au côté supérieur (4) de la culasse (1).

4. Dispositif selon l'une des revendications 1 à 3, **caractérisé en ce qu'**entre les deux bords longitudinaux (7, 8, 7b, 8b) de la bride de tête (5, 5b) des déformations en forme d'embout (9) sont prévues pour recevoir les tuyaux d'échappement (6, 6b).

5. Dispositif de fixation étanche de la bride de tête (5, 5c) d'un collecteur d'échappement (3, 3 a-c) comprenant au moins deux tuyaux d'échappement (6, 6a-c) disposés en rang, sur la culasse (1) d'un moteur à combustion interne, lequel présente une baguette de butée (15, 15a) vissée sur la culasse (1) venant en engagement avec un premier bord longitudinal (7, 7a-c) de la bride de tête (5, 5a-c), des moyens de contrainte (22) agissant sur l'autre deuxième bord longitudinal (8, 8a-c) de la bride de tête (5, 5a-c), et un joint (24) entre la bride de tête (5, 5c) et la culasse (1), **caractérisé en ce que** la baguette de butée (15ₐ) est formée en S dans sa section transversale et de manière élastique en faisant ressort et vient en engagement par une branche de butée (14a) s'étendant de manière essentiellement parallèle au côté supérieur (4) de la culasse (1) avec le premier bord longitudinal (7a) de la tête de bride (5a) emboutie dans une platine en tôle et s'étendant dans un plan, alors que le deuxième bord longitudinal (8a) de la tête de bride (5a) muni de perçages (31) est contraint directement contre la culasse (1) par des vis de fixation (22).

6. Dispositif de fixation étanche de la bride de tête (5, 5c) d'un collecteur d'échappement (3, 3 a-c) comprenant au moins deux tuyaux d'échappement (6, 6a-c) montés en rang, sur la culasse (1) d'un moteur à combustion interne, lequel présente une baguette de butée (15, 15a) vissée sur la culasse (1) venant en engagement avec un premier bord longitudinal (7, 7a-c) de la bride de tête (5, 5a-c), des moyens de contrainte (22) agissant sur l'autre deuxième bord longitudinal (8, 8a-c) de la bride de tête (5, 5a-c), et un joint (24) entre la bride de tête (5, 5c) et la culasse (1), **caractérisé en ce que** le deuxième bord longitudinal (8, 8a-c) de la tête de bride (5, 5c) est contraint par des moyens de fixation sous forme de vis de fixation (22) au moins indirectement avec la culasse (1), moyennant quoi un premier bord longitudinal (7c) de la tête de bride (5c) emboutie dans une platine en tôle et s'étendant dans un plan, est en engagement par une branche de butée (14a) s'étendant de manière essentiellement parallèle au côté supérieur (4) de la culasse (1) d'une baguette de butée (15a) formée en S dans sa section transversale et de manière élastique en faisant ressort, et un deuxième bord longitudinal (8c) de la tête de bride (5c) est mis en prise par une branche de fixation (43) d'une baguette de fixation (42) formée en S dans sa section transversale, s'étendant de manière essentiellement parallèle au côté supérieur (4) de la culasse (1).

7. Dispositif selon la revendication 5 ou 6, **caractérisé en qu'**entre les deux bords longitudinaux (7a, 8a ; 7c, 8c) de la tête de bride (5a, 5c), des évidements (27) sont prévus pour recevoir les tuyaux d'échappement (6a, 6c).

8. Dispositif selon la revendication 1 ou 7, **caractérisé en que** le joint (24) est formé comme joint à une ou plusieurs couches.
